# EUROPÄISCHE PATENTANMELDUNG

(11) **EP 0 949 567 A2**
(43) Veröffentlichungstag der Anmeldung: **13.10.1999**
(21) Anmeldenummer: 99107045.9
(22) Anmeldetag: 09.04.1999
(51) Int. Cl.: G06F 9/46

(54) **Multiprozessorsystem sowie Verfahren zum Abarbeiten anfallender Aufträge in einem Multiprozessorsystem**

(30) Priorität: 09.04.1998 DE 19816135
(71) Anmelder: SIEMENS AKTIENGESELLSCHAFT, 80333 München (DE)
(72) Erfinder: Thelen, Thomas, 85662 Hohenbrunn (DE); Vekens, Alexander, van der, 71139 Ehningen (DE)

(57) **Zusammenfassung**

Verfahren zum Abarbeiten anfallender Aufträge in einem Multiprozessorsystem, mit folgenden Schritten:
Ausgeben eines Auftrags von einem ausgewählten Prozessor des Multiprozessorsystems an ein Distributorsystem, wobei der Auftrag einen Auftragsdatensatz, enthaltend eine Auftraggeberkennung, eine Nachrichtentypkennung sowie eine Empfängerkennung, aufweist,
Ermitteln innerhalb des Distributorsystems derjenigen weiteren Prozessoren innerhalb des Multiprozessorsystems, die in die Bearbeitung einbezogen werden sollen, wobei die Ermittlung auf einer Analyse der Nachrichtentypkennung sowie der Empfängerkennung beruht,
Ausgeben einer Vielzahl von Unteraufträgen an eine Vielzahl von weiteren Prozessoren innerhalb des Multiprozessorsystems, die gemäß der Ermittlung des Distributorsystems in die Bearbeitung des Auftrags einbezogen werden sollen,
Abarbeiten der Unteraufträge innerhalb der Vielzahl von weiteren Prozessoren,
Quittieren der vollständigen Abarbeitung des Unterauftrages an das Distributorsystem durch jeden Prozessor der Vielzahl von weiteren Prozessoren nach erfolgter Abarbeitung des Unterauftrags,
Quittieren der Auftragserledigung durch das Distributorsystem an den ausgewählten Prozessor, nachdem alle Prozessoren aus der Vielzahl der weiteren Prozessoren eine Quittierung über die erfolgte Unterauftragsabarbeitung an das Distributorsystem gesendet haben und unter Berücksichtigung der im Auftragsdatensatz enthaltenen Auftraggeberkennung.

## Beschreibung

Die vorliegende Erfindung betrifft ein Multiprozessorsystem sowie ein Verfahren zum Abarbeiten anfallender Aufträge in einem Multiprozessorsystem.

Insbesondere in der Vermittlungstechnik besteht in vielen Situationen die Notwendigkeit , einen erhaltenen Auftrag von mehreren Baugruppen und insbesondere Prozessoren abarbeiten zu lassen, um somit den Echtzeitanforderungen zu genügen. Zur Lösung dieses Problems ist es üblich, für derartige spezielle Aufträge gesonderte Routinen zu implementieren, die eine verteilte Abarbeitung eines Einzelauftrags durch mehrere Prozessoren gestatten.

Nachteilig an dieser erwähnten bisherigen Lösungsmöglichkeit ist der hohe Aufwand zur Schaffung derartiger Routinen für die entsprechenden Einzelfälle, bei denen eine derartige verteilte Abarbeitung erforderlich ist.

Es ist die Aufgabe der vorliegenden Erfindung, ein Multiprozessorsystem sowie ein Verfahren zum Abarbeiten anfallender Aufträge in einem Multiprozessorsystem anzugeben, durch die eine effizientere Implementierung gewährleistet wird.

Diese Aufgabe wird durch den Gegenstand des Anspruchs 1 sowie den Gegenstand des Anspruchs 5 gelöst. Bevorzugte Ausgestaltungen der vorliegenden Erfindung sind Gegenstand der Unteransprüche.

Eine bevorzugte Ausführungsform der vorliegenden Erfindung wird im folgenden unter Bezugnahme auf die beiliegenden Zeichnungen näher erläutert. Dabei zeigen die Zeichnungen im einzelnen:
Fig. 1 ein Prinzipschaltbild des erfindungsgemäßen Systems;
Fig. 2 eine Übersicht über die Datenhaltung des Distributorsystems;
Fig. 3 ein Klassendiagramm mit Attributen und Methoden für eine objektorientierte Realisierung; und
Fig. 4a bis 4f verschachtelte interne Mthodenaufrufe innerhalb eines Verteilerobjektes.

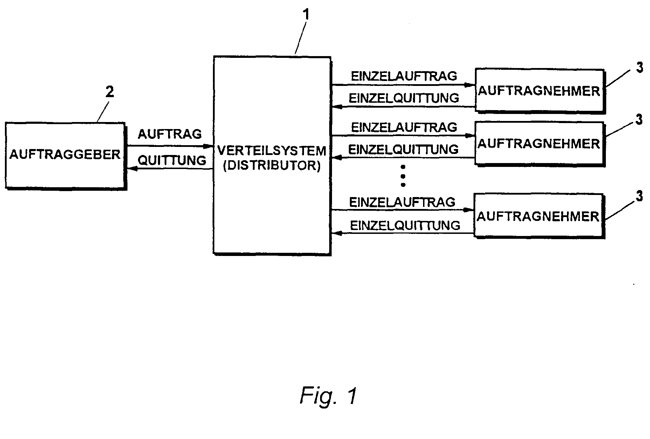

Fig. 1 zeigt ein Prinzipschaltbild des erfindungsgemäßen Systems. Ein Verteil- oder Distributorsystem 1 steht über eine nicht dargestellte Busstruktur mit einem Auftraggeber oder Steuerprozessor 2 sowie mit Auftragnehmern bzw. Peripherieprozessoren 3 in Verbindung. Der Auftraggeber 2 erteilt einen verteilt abzuarbeitenden Auftrag an das Distributorsystem 1. In dem Auftrag sind ein Auftragsdatensatz, aufweisend eine Nachrichtentypkennung (Message Type), ein Empfängerschlüssel (Receiver Key) sowie eine Auftraggeberkennung enthalten. Dia Auftraggeberkennung wird benötigt, um nach vollständiger Abarbeitung des Gesamtauftrags eine Gesamtquittung dem richtigen Objekt zustellen zu können. Der Receiver Key und der Message Type werden benötigt, um die Liste der zugehörigen Auftragnehmer zu ermitteln, die in die Abarbeitung des Auftrags involviert werden sollen.

Entsprechend empfängt das Distributorsystem 1 den Auftrag und ermittelt anhand des Receiver Key und des Message Type diejenigen Auftragnehmer 3, die in die Abarbeitung involviert werden sollen. Anschließend erstellt das Distributorsystem eine Vielzahl von Einzelaufträgen und sendet diese an entsprechende Auftragnehmer 3. Die Auftragnehmer 3 empfangen die Einzelaufträge, arbeiten diese ab und quittieren die vollständige Abarbeitung mittels Einzelquittungen an das Distributorsystem. Das Distributorsystem erstellt nach Empfang aller ausstehender Einzelquittungen eine Gesamtquittung und sendet diese zurück an den Auftraggeber 2. Der Auftraggeber 2 weiß somit, daß der gesamte Auftrag vollständig abgearbeitet wurde. Vorzugsweise wird der Auftraggeber 2 durch einen Steuerprozessor und die Auftragnehmer durch Peripherieprozessoren gebildet. Selbstverständlich kann das Gesamtsystem aus mehreren Auftraggebern 2 bestehen, die alle das gleiche Distributorsystem 1 zur Verteilung der Aufträge an potentielle Auftragnehmer benutzen. Um das Gesamtsystem nicht zu überlasten, enthält das Distributorsystem vorzugsweise Einrichtungen, die eine Begrenzung der pro Auftrag aussendbaren Einzelaufträgen sowie eine Begrenzung der über alle Aufträge hinweg gesendeten Einzelaufträge gestatten.

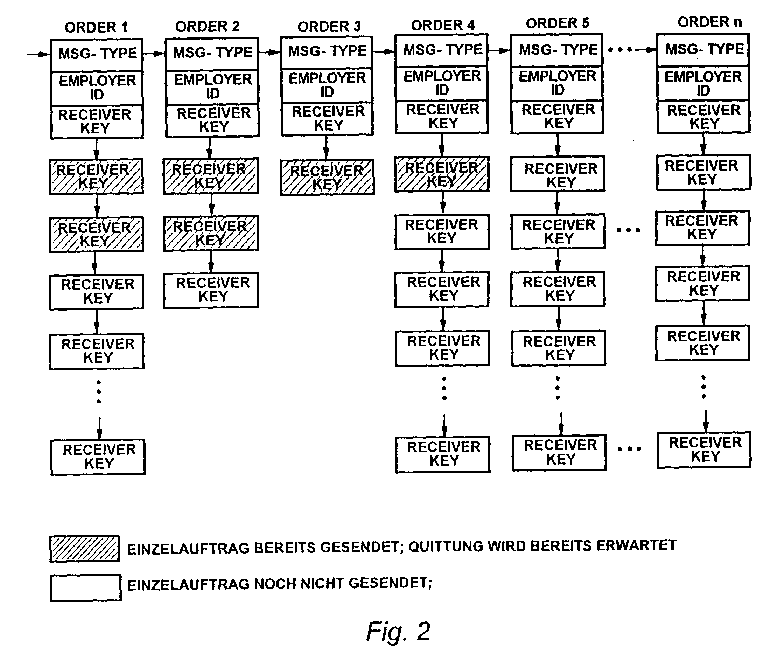

Fig. 2 gibt eine Übersicht über die Datenhaltung des Distributorsystems. Es besteht aus einer Liste von Auftragsdaten, wobei jeder Auftrag eindeutig durch den Message Type (MTYP) und den Receiver Key sowie eine Auftraggeberkennung ("Employer D") bestimmt ist. Fig. 2 zeigt die als Order 1 bis Order n bezeichneten anstehenden Aufträge, die an das Distributorsystem gesendet werden. Das Distributorsystem erstellt daraus eine Vielzahl von Unteraufträgen, die jeweils mit "Receiver ID" bezeichnet sind und sendet diese an die Auftragnehmer. Vorzugsweise wird innerhalb der Liste mit den Kennungen der Unterauftragnehmer zwischen Unterauftragnehmern, denen der Unterauftrag bereits zugestellt wurde und deren Quittung somit schon erwartet wird und denen, die bisher noch nicht involviert waren, unterschieden. Kennungen von Unterauftragnehmern, die ihren Unterauftrag bereits erledigt haben, werden unmittelbar nach Empfang der Einzelquittung aus der Liste gelöscht.

Vorzugsweise besteht die Möglichkeit, einen Auftrag zu unterbrechen, indem ein zugehöriges Cancelkommando an das Distributorsystem gesendet wird. Dieses unterbindet daraufhin sofort das Aussenden weiterer Einzelaufträge an die Auftragnehmer. Dann wartet das Distributorsystem auf ausstehende Einzelquittungen zu dem abgebrochenen Auftrag, um beim Eintreffen der letzten Einzelquittung das Cancelkommando zu quittieren. Die Gesamtquittung auf den Originalauftrag unterbleibt.

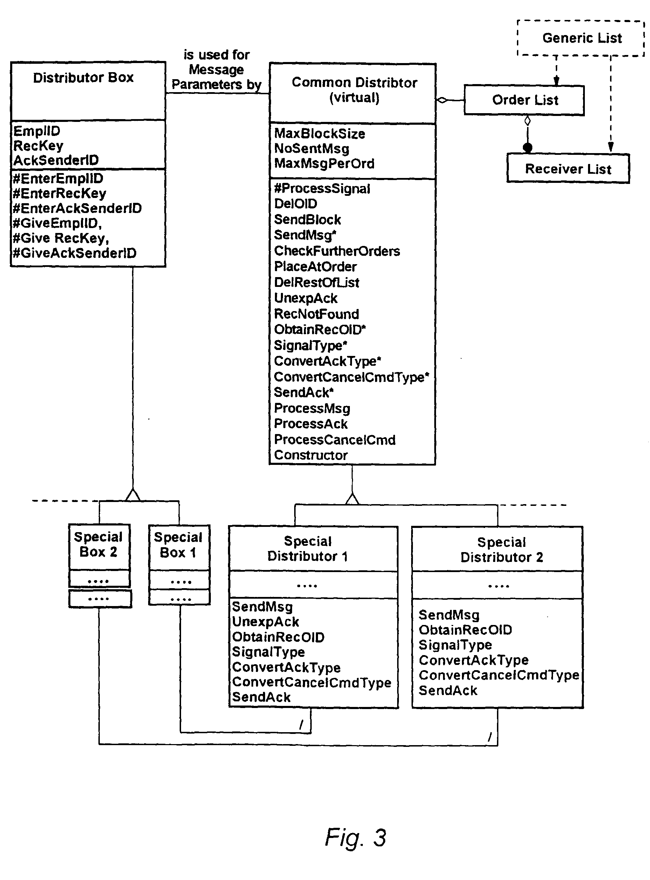

Vorzugsweise wird das Distributorsystem unter Verwendung objektorientierter Prinzipien entwickelt. Fig. 3 zeigt hierzu ein entsprechendes Klassendiagramm mit Attributen und Methoden.

Die Assoziation zwischen einer "Special Box" und den dazugehörigen "Special Distributoren" ist aus der Assoziation zwischen der Distributor Box und Common Distributor abgeleitet.

Die Listen (Orderlist, Receiverlist) sind Ausprägungen einer generischen Listenklasse, d.h. die Methoden und Attribute sind schon in der generischen Klasse definiert, und es wird nur der Datentyp der Listeneinträge in den Ausprägungen konkretisiert.

Jede Verteilungsklasse enthält eine Liste (Orderlist), deren Einträge die sich in Bearbeitung befindenden Aufträge repräsentieren. Die Unterauftragnehmer, an die der Auftrag weitergeleitet worden ist und die ihn noch nicht bearbeitet haben, sind ebenfalls in einer Liste enthalten (Receiverlist), die dem entsprechenden Eintrag in der Orderliste zugeordnet ist.

〈Methodenname〉* kennzeichnet virtuelle Methoden. Für diese Methoden ist nur die Aufrufschnittstelle definiert; die Implementierung muß in einer Unterklasse erfolgen.

Im allgemeinen sollten zur Erstellung anwendungsspezifischer Verteilungsklassen nur die virtuellen Methoden der allgemeinen Oberklasse Common Distributor redefiniert werden. Eine Ausnahme bildet die Methode UnexpAck, für die schon in der Oberklasse ein Default-Verhalten implementiert ist. Dieses Verhalten kann, muß aber nicht, in einer Unterklasse redefiniert werden.

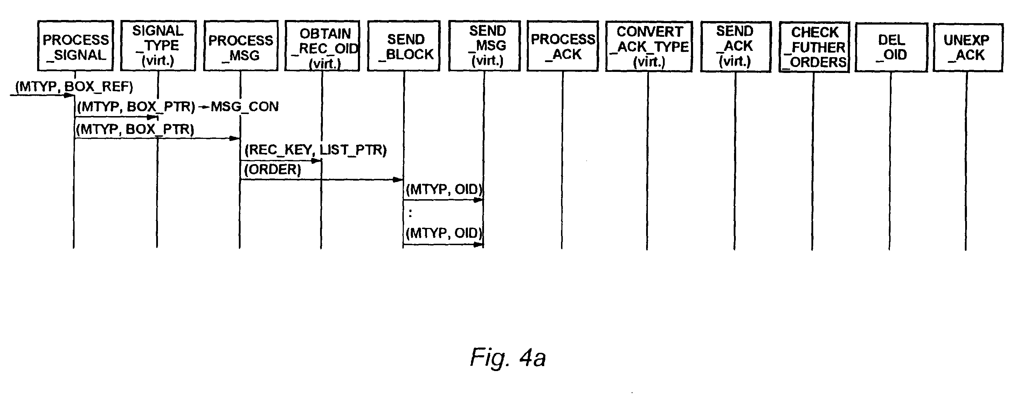

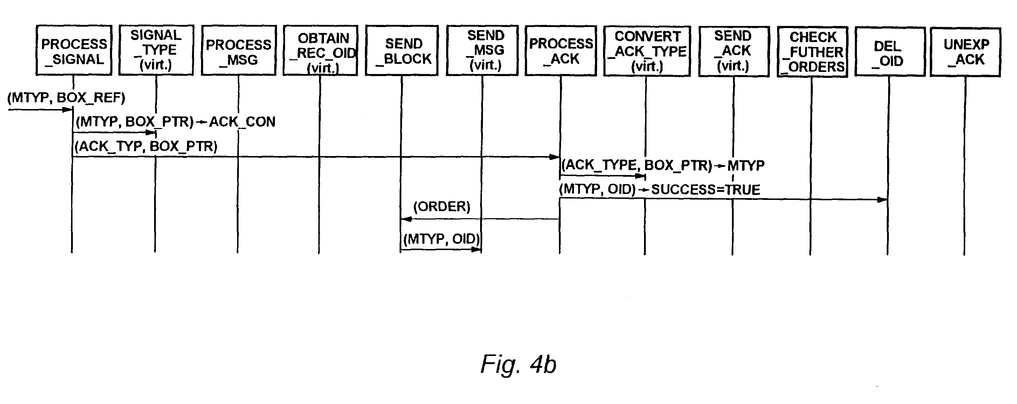

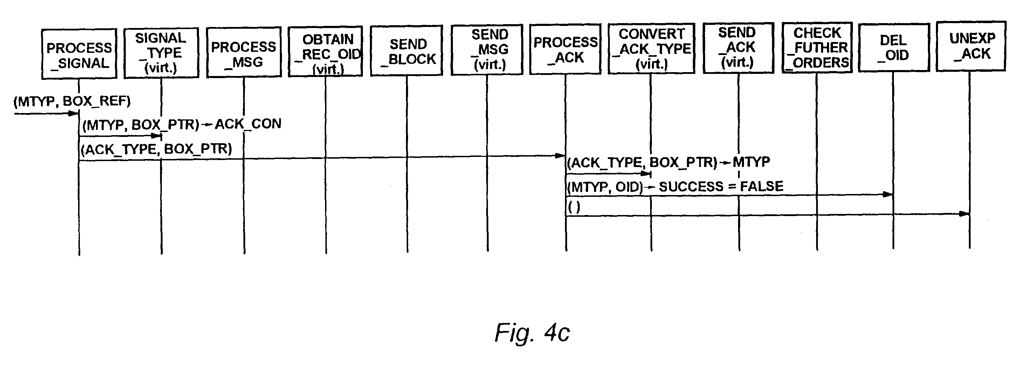

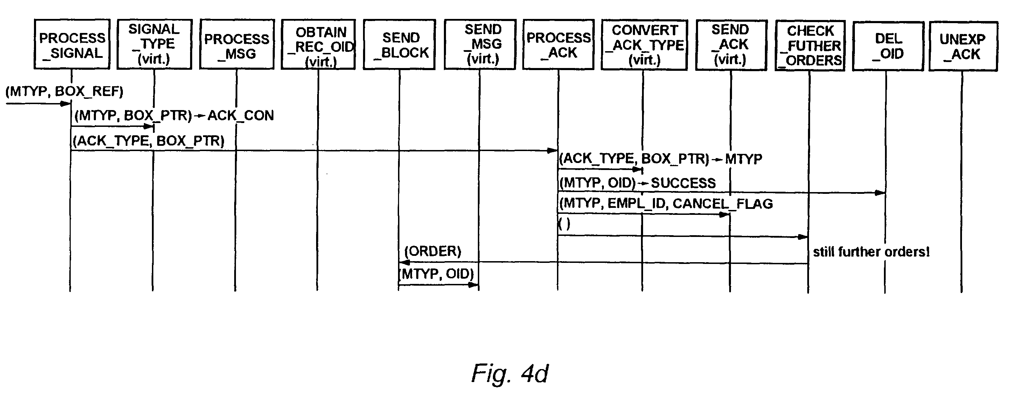

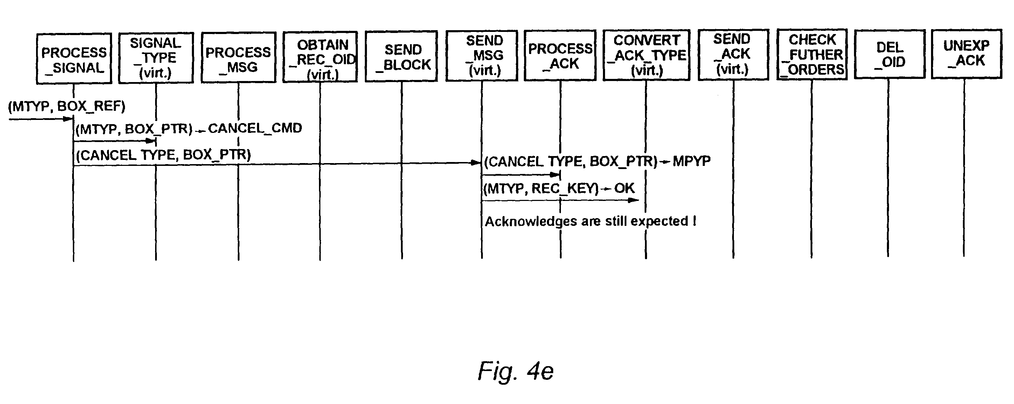

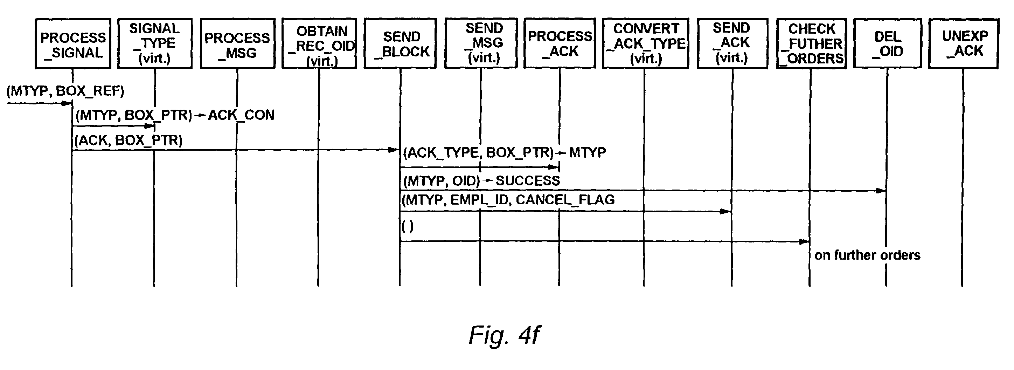

Die Semantik der Methoden wird anhand der in den Fig. 4a, 4b, 4c, 4d, 4e sowie 4f erläutert.

Fig. 4a bis 4f zeigen die verschachtelten internen Methodenaufrufe innerhalb des Verteilerobjekts. Die Beschriftungen der Pfeile bezeichnen dabei die Parameter der Methoden.

Fig. 4a erläutert die Zustellung eines Auftrags (Order).

Der Auftraggeber ruft beim Verteilerobjekt die Methode PROCESS_SIGNAL auf. Dabei wird die Art des Auftrages im Parameter MTYP (Meldungs-Typ) und zusätzliche Informationen über den Auftrag in einem Informationsbehälter, der über den Parameter BOX_REF referenziert wird, zur Verfügung gestellt.

Mit Hilfe dieser Informationen bestimmt die Methode SIGNAL-TYPE die Kategorie der Meldung: ist es ein Auftrag (MSG_CON), eine Quittung eines Unterauftrages (ACK_CON) oder das Löschen eines laufenden Auftrages (CANCEL_CMD). Da es sich in dem oben gezeigten Falle um einen Auftrag handelt, wird die Antwort MSG_CON zurückgegeben. Die Methode PROCESS_SIGNAL ruft deshalb die Methode PROCESS_MSG auf, um den Auftrag weiterzuverarbeiten. Diese Methode liest aus dem Informationsbehälter die Kennung des Auftraggebers (Employer Identifier - EmplID) und den Schlüssel für die Kennung der Unterauftragnehmer (Receiver Key - RecKey). Anhand der Kennung der Unterauftragnehmer bestimmt die Methode OBTAIN_REC_OID die Kennungen aller betroffenen Unterauftragnehmer und gibt diese in der Liste, auf die LIST_PTR zeigt, zurück. Daraufhin wird durch Aufruf der Methode SEND_BLOCK die ersten Unteraufträge zugestellt. Dabei übernimmt die Methode SEND_BLOCK nur die Aufgabe, die Anzahl der zu versendenden Unteraufträge zu ermitteln. Zum eigentlichen Zustellen des Unterauftrages ruft SEND_BLOCK für jeden Unterauftrag die Methode SEND_MSG auf, da das Zustellen abhängig vom Unterauftragnehmer unterschiedlich erfolgen kann.

Fig. 4b illustriert die Quittierung eines Unterauftrags mit ausstehenden weiteren Quittungen (intermediate Aknowledgement).

Hat ein Unterauftragnehmer seine Arbeit erledigt, dann ruft er beim Verteilerobjekt die Methode PROCESS_SIGNAL auf. Dabei enthalten der Parameter MTYP und der durch BOX_PTR referenzierte Informationsbehälter geeignete Werte, mit Hilfe derer die Methode SIGNAL_TYPE bestimmen kann, daß es sich um eine Qittung handelt. Diese Methode gibt dann ACK_CON zurück, woraufhin PROCESS_SIGNAL die Meldung an die Methode PRROCESS_ACK weiterleitet. PROCESS_ACK ruft zuerst die Methode CONVERT_ACK_TYPE auf, die der Quittung den dazugehörigen Auftrag zuordnet, welcher durch den Rückgabeparameter MTYP eindeutig bestimmt werden kann. Der Unterauftrag wird daraufhin mittels der Methode DEL_OID gelöscht. Da es sich um eine gültige ausstehende Quittung handelt, liefert DEL_OID im Parameter SUCCESS den Wert TRUE zurück. Wird nun in der Methode PROCESS_ACK festgestellt, daß noch weitere zum Auftrag gehörende Quittungen ausstehen, können durch Aufruf der Methode SEND_BLOCK weitere Unteraufträge, die zu demselben Auftrag gehören, erteilt werden. Dies ist im angegebenen Beispiel der Fall.

Fig. 4c illustriert den Empfang einer unerwarteten Quittierung eines unerwarteten Auftrags (unexpected Aknowledgement).

Eine Quittung, die keinem Unterauftrag zugeordnet werden kann, wird innerhalb der Methode DEL_OID erkannt: Dort wird festgestellt, daß der Unterauftrag, der quittiert werden soll, nicht mehr existiert und es wird FALSE als Wert des Parameters SUCCESS zurückgegeben. PROCESS_ACK ruft daraufhin die Methode UNEXP_ACK auf, in der festgelegt ist, wie man auf eine unerwartete Quittung reagieren soll (ignorieren, Fehlermeldung ausgeben etc.).

Fig. 4 illustriert den Empfang der letzten ausstehenden Quittierung eines Unterauftrags (last Aknowledgement).

Wird in der Methode PROCESS_ACK nach erfolgreichem Löschen des Unterauftrages durch DEL_OID festgestellt, daß keine weitere Quittung mehr erwartet wird, wird die Erledigung des Gesamtauftrages an den Auftraggeber gemeldet. Dies geschieht wiederum auftraggeberspezifisch durch die Methode SEND_ACK. Dabei wird im CANCEL_FLAG angezeigt, ob der Auftrag vollständig ausgeführt wurde oder ob es sich um die endgültige Beendigung eines abgebrochenen Auftrages handelt.

Nun kann mittels Aufruf von CHECK_FURTHER_ORDERS festgestellt werden, ob noch für andere Aufträge Unteraufträge zu vergeben sind. Ist dies der Fall, wie im obigen Szenario, dann wird wiederum SEND__BLOCK aufgerufen, um eine geeignete Anzahl von Unteraufträgen zu erteilen.

Fig. 4e illustriert den Abbruch eines Auftrags (Cancelation).

Es gibt Situationen, in denen der Auftraggeber feststellt, daß die Bearbeitung eines bereits an das Verteilerobjekt gesendeten Auftrages nicht mehr sinnvoll ist und abgebrochen werden kann. In diesem Fall ruft der Auftraggeber beim Verteilerobjekt erneut die Methode PROCESS_SIGNAL auf und verwendet dabei im Parameter MTYP (Meldungstyp) das zum ursprünglichen Auftragstyp passende Abbruchskommando. Die Methode SIGNAL_TYPE erkennt nun, daß es sich um ein Abbruchskommando handelt (CANCEL_CMD) und veranlaßt so, daß PROCESS_SIGNAL die Methode PROCESS_CANCEL_CMD zur Ausführung bringt. Diese Methode ermittelt unter Zuhilfenahme der Methode CONVERT_ACK_TYPE den zugehörigen MTYP des ursprünglichen Auftrages. Mit diesem und mit der zusätzlich im Informationsbehälter beim Abbruchskommando mitgelieferten Kennung der Unterauftragnehmer (Receiver Key-REC_KEY) kann durch Aufruf der Methode PLACE_AT_ORDER auf den zugehörigen ursprünglichen Auftrag in der Auftragsliste positioniert werden.

Daraufhin löscht die Methode PROCESS_CANCEL_CMD in der zugehörigen Liste mit den Kennungen der Unterauftragnehmer (RECEIVER ID) alle Kennungen von Objekten, die noch keinen Unterauftrag erhalten haben, um zu verhindern, daß weitere Unteraufträge zu diesem Auftrag vergeben werden. Gibt es dann noch wie im obigen Szenario Unterauftragnehmer, denen bereits Unteraufträge gesendet wurden, die noch nicht quittiert sind, so setzt die Methode PROCESS_CANCEL_CMD in diesem Aufrag das CANCEL_FLAG (Bedeutung des CACEL_FLAG siehe unten). Die noch ausstehenden Quittungen werden abgewartet und ganz normal behandelt (siehe: intermediate Acknowledgement). Werden hingegen keine Quittungen von Unterauftragnehmern mehr erwartet, so wird das Abbruchskommando sofort mit Hilfe des Methode SEND_ACK quittiert.

Fig. 4f illustriert den Empfang der letzten ausstehenden Quittierung eines Unterauftrags nach Abbruch des Auftrags (last Aknowledgement, Cancel-Flag).

Der Ablauf eintspricht dem bereits weiter oben beschriebenen Ablauf bei Empfang der letzten ausstehenden Quittierung eines Unterauftrages. Die Abweichung besteht lediglich darin, daß bei Aufruf der Methode SEND_Ack das CANCEL_FLAG gesetzt ist. Dadurch wird veranlaßt, daß als Gesamtquittung an den Auftraggeber nicht die Quittung zum ursprünglichen MTYP, sondern die Quittung zum zugehörigen Abbruchkommando gesendet wird.

## Patentansprüche

1. Verfahren zum Abarbeiten anfallender Aufträge in einem Multiprozessorsystem, mit folgenden Schritten:
Ausgeben eines Auftrags von einem ausgewählten Prozessor des Multiprozessorsystems an ein Distributorsystem, wobei der Auftrag einen Auftragsdatensatz, enthaltend eine Auftraggeberkennung, eine Nachrichtentypkennung sowie eine Empfängerkennung, aufweist,
Ermitteln innerhalb des Distributorsystems derjenigen weiteren Prozessoren innerhalb des Multiprozessorsystems, die in die Bearbeitung einbezogen werden sollen, wobei die Ermittlung auf einer Analyse der Nachrichtentypkennung sowie der Empfängerkennung beruht,
Ausgeben einer Vielzahl von Unteraufträgen an eine Vielzahl von weiteren Prozessoren innerhalb des Multiprozessorsystems, die gemäß der Ermittlung des Distributorsystems in die Bearbeitung des Auftrags einbezogen werden sollen,
Abarbeiten der Unteraufträge innerhalb der Vielzahl von weiteren Prozessoren,
Quittieren der vollständigen Abarbeitung des Unterauftrages an das Distributorsystem durch jeden Prozessor der Vielzahl von weiteren Prozessoren nach erfolgter Abarbeitung des Unterauftrags,
Quittieren der Auftragserledigung durch das Distributorsystem an den ausgewählten Prozessor, nachdem alle Prozessoren aus der Vielzahl der weiteren Prozessoren eine Quittierung über die erfolgte Unterauftragsabarbeitung an das Distributorsystem gesendet haben und unter Berücksichtigung der im Auftragsdatensatz enthaltenen Auftraggeberkennung.

2. Verfahren nach Anspruch 1, **dadurch gekennzeichnet,** daß in dem Distributorsystem sowohl die Anzahl der pro Auftrag aussendbaren Unteraufträge als auch die Anzahl der für alle anstehenden Aufträge ausgegebenen Unteraufträge begrenzt werden.

3. Verfahren nach Anspruch 1 oder 2, **dadurch gekennzeichnet,** daß das Verfahren in einer Vermittlungsstelle zur Abarbeitung von Aufträgen in einer Portbaugruppe verwendet wird.

4. Verfahren nach Anspruch 3, **dadurch gekennzeichnet,** daß die Vermittlungsstelle eine ISDN-Vermittlungsstelle ist.

5. Multiprozessorsystem mit:
einem Steuerprozessor,
einer Vielzahl von Peripherieprozessoren,
einem Distributorsystem,
einer Busstruktur, die den Steuerprozessor mit dem Distributorsystem und das Distributorsystem mit der Vielzahl von Peripherieprozessoren verbindet,
wobei der Steuerprozessor Einrichtungen zum Erstellen und Ausgeben eines Auftrags zur Abarbeitung in den Peripherieprozessoren aufweist, wobei der Auftrag einen Auftragsdatensatz, enthaltend eine Auftraggeberkennung, eine Nachrichtentypkennung sowie eine Empfängerkennung, aufweist,
wobei das Distributorsystem Einrichtungen zum Empfangen des Auftrags von dem Steuerprozessor sowie Einrichtungen zum Bestimmen der in die Bearbeitung des Auftrags einzubeziehenden Peripherieprozessoren anhand der im Auftragsdatensatz enthaltenden Nachrichtentypkennung sowie Empfängerkennung aufweist und weiterhin Einrichtungen aufweist zum Erstellen einer Vielzahl von Unteraufträgen für die in die Bearbeitung einzubeziehenden Peripherieprozessoren sowie zum Abgeben der Unteraufträge an die Peripherieprozessoren,
wobei die Vielzahl von Peripherieprozessoren jeweils Einrichtungen zum Empfangen und Abarbeiten der entsprechenden Unteraufträge sowie zum Erstellen und Abgeben von Einzelquittungen über die vollständige Bearbeitung des entsprechenden Unterauftrags aufweist,
wobei das Distributorsystem Einrichtungen zum Empfangen der Einzelquittungen von den Peripherieprozessoren aufweist sowie Einrichtungen zum Erstellen und Ausgeben einer Gesamtquittung an den Steuerprozessor aufweist, nachdem alle Einzelquittungen des entsprechenden Auftrags vom Distributorsystem empfangen wurden.

6. Multiprozessorsystem nach Anspruch 5, **dadurch gekennzeichet,** daß das Distributorsystem Einrichtungen zum Einstellen der Maximalanzahl der pro Auftrag aussendbaren Unteraufträge sowie der Maximalanzahl der für alle anstehenden Aufträge ausgebbaren Unteraufträge aufweist.

7. Multiprozessorsystem nach Anspruch 5 oder 6, **dadurch gekennzeichnet,** daß das System für die Abarbeitung von Aufträgen in einer Portbaugruppe innerhalb einer Vermittlungsstelle ausgelegt ist.

8. Multiprozessorsystem nach Anspruch 7, **dadurch gekennzeichnet,** daß die entsprechende Vermittlungsstelle eine ISDN-Vermittlungsstelle ist.
